# EUROPÄISCHE PATENTSCHRIFT

(11) **EP 3 942 913 B1**
(45) Veröffentlichungstag und Bekanntmachung des Hinweises auf die Patenterteilung: **13.08.2025**
(21) Anmeldenummer: 21176211.7
(22) Anmeldetag: 27.05.2021
(51) Int. Cl.: A01D 34/38

(54) **MESSERANTRIEBSEINRICHTUNG**
BLADE DRIVE DEVICE
DISPOSITIF D'ENTRAÎNEMENT DE COUTEAU

(30) Priorität: 23.07.2020 DE 102020119433
(43) Veröffentlichungstag der Anmeldung: 26.01.2022
(73) Patentinhaber: CLAAS Selbstfahrende Erntemaschinen GmbH, 33428 Harsewinkel (DE)
(72) Erfinder: KÜHN, Michael, 48361 Beelen (DE); DUDLER, Heribert, 33428 Harsewinkel (DE); WOHLFAHRT, Fabian, 33428 Harsewinkel (DE)
(74) Vertreter: CLAAS Gruppe

(56) Entgegenhaltungen:
- EP-A1- 0 090 879
- DE-A1- 19 614 092
- DE-B- 1 161 448
- GB-A- 807 223

## Beschreibung

Die Erfindung betrifft ein Vorsatzgerät für eine Erntemaschine mit einem oszillierenden Messer und einer hydraulischen Messerantriebseinrichtung gemäß dem Oberbegriff des Anspruchs 1. Erntemaschinen, insbesondere selbstfahrende landwirtschaftliche Erntemaschinen, wie etwa ein Feldhäcksler oder Mähdrescher, sind im Erntebetrieb in aller Regel mit einem als Schneidwerk ausgebildeten Vorsatzgerät ausgestattet. Derartige Vorsatzgeräte weisen vorderseitig eine Vielzahl von oszillierenden Messern auf, welche auf einem oder auch auf mehreren Messerbalken angeordnet sind. Aus dem Stand der Technik sind hydraulische Messerantriebseinrichtungen zum Antrieb der oszillierenden Messer, welche insbesondere den Messerbalken antreiben, auf dem die Messer angeordnet sind, bekannt.

Die DE 196 14 092 zeigt ein Vorsatzgerät mit einer derartigen Messerantriebseinrichtung. Der Messerbalken mit den Messern wird hier mittels eines doppeltwirkenden Nehmerzylinders in eine oszillierende Bewegung versetzt. Eine Hydraulikpumpe beaufschlagt den Nehmerzylinder mit Hydraulikflüssigkeit, wobei die Hydraulikpumpe als Kolbenpumpe mit zwei Kolben ausgebildet ist, wobei je ein Kolben über Druckleitungen auf je eine Seite des doppelt wirkenden Nehmerzylinders wirkt.

Die DE 11 61 448 B zeigt auch ein Vorsatzgerät für eine Erntemaschine gemäß dem Oberbegriff des Anspruchs 1.

Bei solchen Messerantriebseinrichtungen entsteht häufig auf Grund der Dynamik, insbesondere Trägheit, des Öls sowie dessen Kompressibilität ein Gangunterschied zwischen den Kolben der Hydraulikpumpe und dem Nehmerzylinder. Schlimmstenfalls addiert sich mit jedem Hub der Zylindereinheiten der Gangunterschied auf, sodass die Zylindereinheiten gegenläufig zueinander arbeiten. Hieraus resultiert, dass der Kolben des Nehmerzylinders die äußeren Anschläge nicht mehr wie vorgesehen erreicht und folglich der Messerbalken nicht die vorgesehene Oszillationsbewegung ausführt. Besonders kritisch wirkt sich ein solches Verhalten bei mehreren oszillierenden Messerbalken aus, die zur Schwingungsdämpfung des Vorsatzgeräts gegenläufig angetrieben werden. Eine optimale Synchronisierung der Messerbalken ist somit durch die in der DE 196 14 092 offenbarte hydraulische Messerantriebseinrichtung nicht gewährleistet.

Es ist deshalb Aufgabe der Erfindung, die beschriebenen Nachteile des Standes der Technik zu vermeiden und insbesondere eine hydraulische Messerantriebseinrichtung zu schaffen, welche einen zwangsgeführten hydraulischen Antrieb sowie eine selbstständige Synchronisation der Messer gewährleistet.

Diese Aufgabe wird erfindungsgemäß durch die kennzeichnenden Merkmale des Anspruchs 1 gelöst.

Gemäß dem Anspruch 1 wird ein Vorsatzgerät für eine Erntemaschine mit einem oszillierenden Messer und einer hydraulischen Messerantriebseinrichtung für das oszillierende Messer vorgeschlagen, umfassend zumindest einen Nehmerzylinder zum Antrieb des oszillierenden Messers, wobei der zumindest eine Nehmerzylinder durch zumindest einen ersten Geberzylinder angetrieben ist, wobei der zumindest eine erste Geberzylinder ein größeres Hubvolumen als der zumindest eine Nehmerzylinder aufweist.

Dadurch dass der erste Geberzylinder ein größeres Hubvolumen als der Nehmerzylinder aufweist, fördert der erste Geberzylinder auch nach Erreichen einer vorgesehenen äußeren Bewegungsendlage des Nehmerzylinders Öl hin zu dem Nehmerzylinder. Eine derartige Ausgestaltung der Zylinder stellt sicher, dass der Hubkolben des Nehmerzylinders die vorgesehene äußere Bewegungsendlage erreicht und solange dort verweilt, bis der Hubkolben des ersten Geberzylinders und somit auch die Messer ebenfalls seine äußere Bewegungsendlage erreicht hat. Hierdurch resultiert eine zwangsgeführte Synchronisierung des Nehmerzylinders mit dem ersten Geberzylinder in einer Bewegungsendlage. Ein Gangunterschied infolge der Kompressibilität und Dynamik innerhalb der hydraulischen Messerantriebseinrichtung wird vermieden. Die Bewegungsendlage entspricht dem Wendepunkt der Bewegungsrichtung eines Hubkolbens innerhalb des Zylinders.

In einer vorteilhaften Ausgestaltung kann der zumindest eine Nehmerzylinder als doppeltwirkender Zylinder ausgebildet sein, sodass ein Nehmerzylinder zum Antrieb der Messer ausreicht und kein weiterer Nehmerzylinder zum Antrieb der Messers vorderseitig am Schneidwerk erforderlich ist.

In einer vorteilhaften Weiterbildung kann der zumindest eine Nehmerzylinder auf der Kolbenseite und Stangenseite über jeweils ein Druckbegrenzungsventil mit einem Reservoir verbunden sein. Beim Erreichen der äußeren Bewegungsendlagen des innerhalb des Nehmerzylinders befindlichen Hubkolbens kann somit das zusätzlich geförderte Öl durch die Druckbegrenzungsventile entweichen und dem Reservoir zugeführt werden.

Neben der Druckbegrenzung bietet diese vorteilhafte Weiterbildung die Möglichkeit das innerhalb der hydraulischen Messerantriebseinrichtung befindliche Öl mit kühlerem Öl des Reservoirs auszutauschen. Das Reservoir kann beispielsweise ein größeres Behältnis oder Tank mit einer darin befindlichen Ölmenge sein.

Erfindungsgemäß ist der zumindest eine Nehmerzylinder trieblich mit einem schwenkbeweglich gelagerten Hebel verbunden, wobei der Hebel endseitig an dem Messer angeordnet ist.

Ein derartiger Hebel kann beispielsweise als Hohlwelle oder Profilelement ausgebildet sein und bietet den Vorteil, dass der Nehmerzylinder beabstandet von dem Messer angeordnet werden kann, zumal im Bereich der Messer der zur Verfügung stehende Platz stark begrenzt ist. Weiterhin kann ein Hebel derartig gelagert sein, sodass dieser zu einer Vergrößerung der Amplitude der von dem Nehmerzylinder auf die Messer übertragenen Oszillationsbewegung führt.

Besonders vorteilhaft ist es, wenn der zumindest eine erste Geberzylinder über zumindest ein Rückschlagventil mit dem Reservoir verbunden ist. Der Geberzylinder kann somit eine zuvor über die Rückschlagventile ausgespeiste Ölmenge über das Reservoir ansaugen. Darüber hinaus bietet die Ausgestaltung den Vorteil, dass die hydraulische Messerantriebseinrichtung zur selbstständigen Entlüftung eingerichtet ist. Auf Grund des größeren Hubvolumens des ersten Geberzylinders gegenüber dem Nehmerzylinder wird innerhalb der Messerantriebseinrichtung befindliche Luft über die Druckbegrenzungsventile abgeführt und mittels der Rückschlagventile durch Öl ersetzt.

Eine besonders einfache Umsetzung der erfindungsgemäßen hydraulischen Messerantriebseinrichtung sieht vor, dass der zumindest eine erste Geberzylinder als doppelt wirkender erster Geberzylinder ausgebildet ist.

Vorteilhaft ist es, wenn der zumindest eine erste Geberzylinder durch einen Kurbeltrieb angetrieben ist. Ein Kurbeltrieb ist beispielsweise aus dem Aufbau eines Verbrennungsmotors bekannt. Ein Kurbeltrieb bietet den besonderen Vorteil, dass der Geschwindigkeitsverlauf des Hubkolbens innerhalb des Geberzylinders einen sinusförmigen Verlauf aufweist, wobei die Geschwindigkeit hin zu den Bewegungsendlagen des Hubkolbens ein Minimum annimmt. Der sinusförmige Geschwindigkeitsverlauf des dem ersten Geberzylinder zugeordneten Hubkolbens wird im Wesentlichen auf den dem Nehmerzylinder zugeordneten Hubkolben und somit auf die Messer übertragen. Dies ermöglicht einen materialschonenden Antrieb der Messer, zumal ein abruptes Abbremsen und Beschleunigen vermieden wird. Darüber hinaus können die auf den Aufbau des Vorsatzgeräts übertragenen Schwingungen gedämpft werden.

In einer vorteilhaften Weiterbildung kann der doppelt wirkende erste Geberzylinder auf der Kolbenseite und Stangenseite über jeweils ein Rückschlagventil mit dem Reservoir verbunden sein, sodass der Geberzylinder kolbenseitig und stangenseitig aus dem Reservoir Öl ansaugen kann.

Zum sicherstellen des Zusammenwirkens des ersten Geberzylinders mit dem Nehmerzylinder können der zumindest eine erste Geberzylinder und der zumindest eine Nehmerzylinder sowohl auf der Kolbenseite als auch auf der Stangenseite hydraulisch miteinander verbunden sein, wobei insbesondere eine erste Hydraulikleitung die Kolbenseiten und eine zweite Hydraulikleitung die Stangenseiten der Zylinder miteinander verbindet.

Insbesondere kann die hydraulische Messerantriebseinrichtung einen doppelt wirkenden ersten Geberzylinder und einen doppeltwirkenden Nehmerzylinder umfassen, wobei der erste Geberzylinder und der Nehmerzylinder hydraulisch miteinander verbunden sind, wobei der Nehmerzylinder kolbenseitig und stangenseitig jeweils über ein Druckbegrenzungsventil mit dem Reservoir verbunden ist, wobei der erste Geberzylinder kolbenseitig und stangenseitig jeweils über ein Rückschlagventil mit dem Reservoir verbunden ist, wobei der erste Geberzylinder mittels eines Kurbeltriebs angetrieben ist.

In einer bevorzugten Ausführungsform kann die hydraulische Messerantriebseinrichtung zumindest einen zweiten Geberzylinder aufweisen, wobei vorzugsweise der zumindest eine erste und der zumindest eine zweite Geberzylinder als einfachwirkende Zylinder ausgebildet sind, wobei der zumindest eine erste und der zumindest eine zweite Geberzylinder hydraulisch mit dem zumindest einen Nehmerzylinder verbunden sind, wobei der zumindest eine erste und der zumindest eine zweite Geberzylinder über jeweils ein Rückschlagventil mit dem Reservoir verbunden sind. Hierbei kann vorgesehen sein, dass der erste Geberzylinder den Nehmerzylinder kolbenseitig mit Öl beaufschlägt und der zweite Geberzylinder den Nehmerzylinder stangenseitig mit Öl beaufschlägt. Alternativ kann die Beaufschlagung des Nehmerzylinders von den Geberzylindern aber auch in umgekehrter Weise erfolgen. Besonders vorteilhaft an der Ausführungsform ist nun, dass die Hubvolumina des ersten und zweiten Geberzylinders unterschiedlich zueinander ausgebildet sein können, sodass eine komplexere und zweckmäßigere Synchronisierung des ersten und zweiten Geberzylinders mit dem Nehmerzylinder möglich ist.

In einer vorteilhaften Weiterbildung kann der zumindest eine zweite Geberzylinder ein kleineres Hubvolumen als der zumindest eine erste Geberzylinder aufweisen, wobei vorzugsweise das Hubvolumen des zumindest einen zweiten Geberzylinders im Wesentlichen dem Hubvolumen des zumindest einen Nehmerzylinders entspricht. Dadurch, dass das Hubvolumen des zweiten Geberzylinders kleiner als das des ersten Geberzylinders ist, wird die Verweilzeit des dem Nehmerzylinder zugeordneten Hubkolbens in seiner zweiten Bewegungsendlage verringert, das Öl weniger stark komprimiert und somit weniger stark erhitzt. Eine Synchronisierung erfolgt jedoch weiterhin in einer ersten Bewegungsendlage des Nehmerzylinders mittels des ersten Geberzylinders.

In einer vorteilhaften Weiterbildung können die Geberzylinder durch einen Kurbeltrieb angetrieben sein. Hierdurch kann ein sinusförmiges Geschwindigkeitsprofil der den Geberzylindern zugeordneten Hubkolben erreicht werden. Darüber hinaus ist es besonders vorteilhaft, wenn die Geberzylinder mittels eines Kurbeltriebes gemeinsam angetrieben werden, um eine einfache Synchronisierung der Geberzylinder zu erreichen.

Insbesondere kann die hydraulische Messerantriebseinrichtung zwei einfach wirkende erste Geberzylinder und zwei einfach wirkende zweite Geberzylinder umfassen, wobei jeweils ein erster Geberzylinder und ein zweiter Geberzylinder mit einem doppelt wirkenden Nehmerzylinder hydraulisch verbunden ist, wobei die Nehmerzylinder kolbenseitig und stangenseitig über jeweils ein Druckbegrenzungsventil mit einem Reservoir verbunden sind, wobei die ersten und zweiten Geberzylinder über jeweils ein Rückschlagventil mit dem Reservoir verbunden sind, wobei die ersten und zweiten Geberzylinder über einen Kurbeltrieb gemeinsam angetrieben sind, wobei der Antrieb der ersten Geberzylinder um 180 Grad phasenverschoben zum Antrieb der zweiten Geberzylinder ist.

Vorzugsweise weist das Vorsatzgerät zwei Messerbalken und die Messerantriebseinrichtung zumindest zwei Nehmerzylinder auf, wobei die Messerantriebseinrichtung derart ausgestaltet ist, dass die Nehmerzylinder die Messerbalken gegenläufig zueinander antreiben. Insbesondere eine Ausgestaltung der Messerantriebseinrichtung mit zwei Nehmerzylindern ermöglicht es zwei Messerbalken mit darauf befindlichen Messern gegenläufig zueinander anzutreiben, sodass eine Schwingungskompensation erfolgt und die von den Messerbalken auf den Aufbau des Vorsatzgeräts übertragenen Schwingungen reduziert oder sogar vermieden werden können.

Die Erfindung hat viele Vorteile. Auf Grund der flexiblen Hydraulikleitungen einer hydraulischen Messerantriebseinrichtung lässt sich diese gegenüber einer herkömmlichen mechanischen Messerantriebseinrichtung auf einfache Art und Weise in das Vorsatzgerät integrieren. Dies wirkt sich besonders vorteilhaft auf Vorsatzgeräte mit in seiner Länge verstellbaren Schneidtischen auf. Die einfache Integrierbarkeit und ein geringer Platzbedarf hydraulischer Messerantriebseinrichtungen vereinfacht ebenfalls eine Anordnung der Nehmerzylinder in einem mittleren Bereich des Vorsatzgeräts bzw. der Messerbalken. Durch einen mittigen Antrieb ergibt sich auch der Vorteil, dass die Seitenwände des Vorsatzgeräts durch den Wegfall des seitlichen Antriebs der Messer bzw. Messerbalken schmaler ausgeführt werden können und Kontakte des Ernteguts mit an den Vorsatzgerät angeordneten Gehäusen und daraus resultierenden Verluste vermieden werden. Weiterhin wirken bei einem mittigen Antrieb geringere Kräfte außenseitig auf das Gehäuse des Vorsatzgeräts, sodass das gesamte Gehäuse leichter ausgeführt werden kann.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Draufsicht eines Vorsatzgeräts,
- Figur 2: eine schematische Darstellung der hydraulischen Messerantriebseinrichtung,
- Figur 3: eine weitere Ausführungsform der hydraulischen Messerantriebseinrichtung,
- Figur 4: einen Ausschnitt eines Schneidwerks mit einem Hebel zur Übertragung einer Oszillationsbewegung auf die Messer.

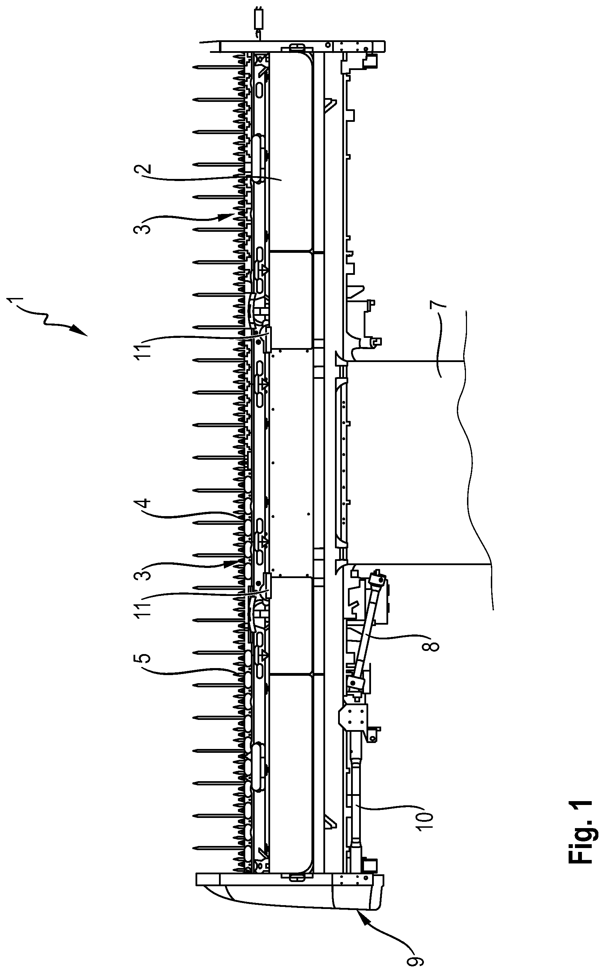

In der Figur 1 ist mit 1 ein als Schneidwerk 1 ausgebildetes Vorsatzgerät dargestellt, das einen Schneidtisch 2 aufweist. Der Schneidtisch 2 nimmt ein Mähmesser auf, das aus einem Messerbalken 3 und einer Vielzahl darauf befestigter Messer 4 besteht, die in beide Bewegungsrichtungen weisende Schneiden aufweisen. Dabei sind die Messer 4 in einer Vielzahl von Fingern 5 geführt, welche am Schneidtisch 2 befestigt sind und mit ihren Spitzen in Mährichtung weisen.

In aller Regel weisen Schneidwerke 1 eine hier nicht näher dargestellte und allgemein bekannte Haspel auf, welche quer zur Fahrtrichtung verläuft und auf das noch ungeschnittene Erntegut einwirkt. Die Haspel hat in erster Linie die Aufgabe das Erntegut dem Messerbalken 3 zuzuführen. Die Messer 4 bzw. der Messerbalken 3 wird von einer noch näher zu erläuternden hydraulischen Messerantriebseinrichtung 6 in eine oszillierende Bewegung versetzt, so dass das Erntegut geschnitten wird und auf den Schneidtisch 2 fällt. Anschließend wird das Erntegut, ggf. unter weiterer Einwirkung durch die Haspel, mittels einer hier nicht dargestellten und allgemein bekannten Einzugsschnecke dem Schrägförderer 7 zugeführt. Der Schrägförderer 7 führt das Erntegut anschließend einer nicht dargestellten Aufbereitungseinrichtung, wie beispielsweise einer Dresch- und Trenneinrichtung eines Mähdreschers zu. Der Schneidtisch 2 des in Fig. 1 dargestellten Schneidwerks 1 ist in seiner Länge in Mährichtung verstellbar ausgebildet.

Das gesamte Schneidwerk 1 ist vorzugsweise durch eine Kuppeleinrichtung mit dem Schrägförderer 7 verbindbar, wobei der Antrieb des Schneidwerks 1 von einer im Schrägförderer 7 angeordneten Welle (nicht gezeigt) aus über eine erste Kardanwelle 8 auf einen seitlich am Schneidwerk 1 befindlichen und an sich bekannten Winkeltrieb 9 erfolgt. Das in Fig. 1 gezeigte Schneidwerk 1 weist zwischen der Kardanwelle 8 und dem Winkeltrieb 9 eine Antriebswelle 10 auf, welche das Antriebsmoment von der Kardanwelle 8 hin zu dem Winkeltrieb 9 überträgt. Zur Anpassung der Drehzahl kann beispielsweise zwischen der Antriebswelle 10 und der Kardanwelle 8 ein Getriebe vorgesehen sein. Die Kardanwelle 8 und Antriebswelle 10 sind im hinteren Bereich des Schneidwerks 1 angeordnet. Der Winkeltrieb 9 treibt zum einen die Einzugsschnecke und zum anderen die Haspel an.

Zum versetzten der Messer 4 in eine oszillierende Bewegung ist die hydraulische Messerantriebseinrichtung 6 vorgesehen. Diese umfasst im dargestellten Ausführungsbeispiel zwei Nehmerzylinder 11. Die Nehmerzylinder 11 sind in der Mitte des Schneidwerks 1 angeordnet und trieblich in noch näher zu erläuternder Weise mit den Messern 4 verbunden. Das Schneidwerk 1 umfasst zwei seitlich versetzt zueinander angeordnete Messerbalken 3 auf denen jeweils eine Vielzahl von Messern 4 angeordnet sind. Die zwei Nehmerzylinder 11 versetzten jeweils einen der Messerbalken 3 in eine oszillierende Bewegung, wobei die oszillierende Bewegung der Messerbalken 3 zueinander gegenläufig um 180 Grad phasenverschoben ist. In einer alternativen Ausgestaltung kann ebenfalls lediglich ein Messerbalken 3 und ein trieblich mit diesem verbundenen Nehmerzylinder 11 vorgesehen sein. Analog können ebenfalls auch drei, vier oder mehr Messerbalken 3 vorgesehen sein, die jeweils mit einem Nehmerzylinder 11 trieblich verbunden sind.

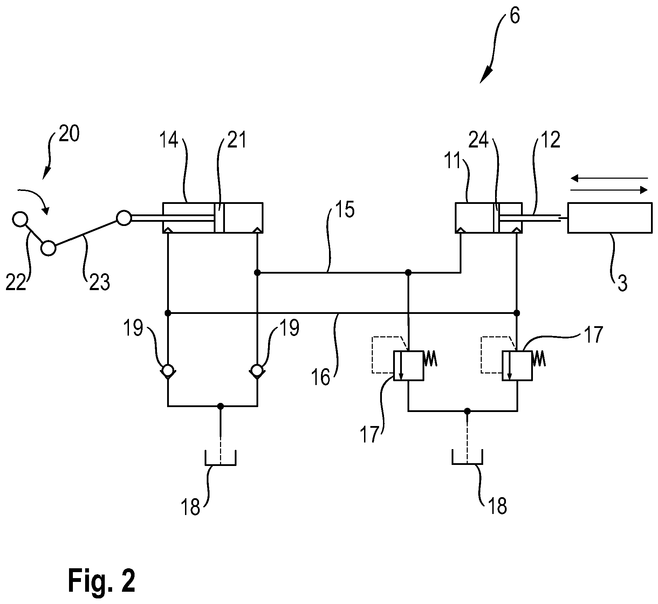

Fig. 2 zeigt eine Ausführungsform der hydraulischen Messerantriebseinrichtung 6 in einer schematischen Darstellung. In der dargestellten, exemplarischen Ausführungsform ist die Kolbenstange 12 des Nehmerzylinders 11 unmittelbar mit dem Messerbalken 3 verbunden. Eine mittelbare Anordnung des Nehmerzylinders 11 mit dem Messerbalken 3, mittels eines noch näher zu erläuternden Hebels 13, liegt jedoch im Rahmen der Erfindung. Weiterhin kann der Nehmerzylinder 11 eine nicht gezeigte Endlagendämpfung, insbesondere eine hydraulische oder mit einem oder mehreren Federelementen ausgebildete Endlagendämpfung, aufweisen, welche zur Dämpfung der Hubbewegung des Hubkolbens 24 im Bereich der Endlagen ausgebildet und vorgesehen ist.

Der Nehmerzylinder 11 wird von einem ersten Geberzylinder 14 angetrieben. Hierfür sind der Geberzylinder 14 und Nehmerzylinder 11 als doppelt wirkende Zylinder 11, 14 ausgebildet und hydraulisch miteinander verbunden. Eine erste Hydraulikleitung 15 verbindet den ersten Geberzylinder 14 und den Nehmerzylinder 11 kolbenseitig und eine zweite Hydraulikleitung 16 stangenseitig miteinander. Alternativ ist aber auch eine Verbindung der jeweiligen Kolbenseite mit der jeweiligen Stangenseite der Zylinder 11, 14 möglich.

Der erste Geberzylinder 14 weist ein größeres Hubvolumen als der Nehmerzylinder 11 auf. Hierdurch ist sichergestellt, dass der Nehmerzylinder 11 trotz der Dynamik und Kompressibilität des Öls bis zu den vorgesehenen äußeren Bewegungsendlagen verfahren wird und dort kurzzeitig verweilt, bis der erste Geberzylinder 14 ebenfalls bis zur äußeren Bewegungsendlage verfahren ist. Dies führt zu einer zwangsgeführten Synchronisierung des Nehmerzylinders 11 mit dem ersten Geberzylinder 14.

Der Nehmerzylinder 11 ist sowohl auf der Kolbenseite als auch auf der Stangenseite jeweils mit einem Druckbegrenzungsventil 17 verbunden. In Fig. 2 sind hierfür der ersten und zweiten Hydraulikleitung 15, 16 Druckbegrenzungsventile 17 zugeordnet, welche die Hydraulikleitungen 15, 16 mit einem Reservoir 18 verbinden. Beim Erreichen der äußeren Bewegungsendlange des Nehmerzylinders 11 kann somit das zusätzlich auf Grund des größeren Hubvolumens des Geberzylinders 14 geförderte Öl entweichen und dem Reservoir 18 zugeführt werden.

Kolbenseitig und stangenseitig ist der erste Geberzylinder 14 jeweils mit einem Rückschlagventil 19 verbunden. Hierfür sind der ersten und zweiten Hydraulikleitung 15, 16 jeweils ein Rückschlagventil 19 zugeordnet, welche die Hydraulikleitungen 15, 16 mit dem Reservoir 18 verbinden. Durch die Rückschlagventile 19 wird dem ersten Geberzylinder 14 Öl zugeführt, welches zuvor über die Rückschlagventile 17 ausgespeist worden ist. Innerhalb des Reservoirs 18 kann zur Absenkung der Öltemperatur eine hier nicht dargestellte Kühlung vorgesehen sein. Weiterhin kann zur Unterstützung der Ansaugphase des Geberzylinders 14 das Reservoir 18 mit einem Speisedruck beaufschlagt sein.

Der erste Geberzylinder 14 ist durch einen Kurbeltrieb 20 angetrieben, welcher den Hubkolben 21 des ersten Geberzylinders 14 in eine oszillierende Bewegung mit einem sinusförmigen Geschwindigkeitsprofil versetzt, wobei die Geschwindigkeit des Hubkolbens 21 hin zu den äußeren Wendepunkten bzw. Bewegungsendlagen des Hubkolbens 21 ein Minimum annimmt. Der in Fig. 2 schematisch dargestellte Kurbeltrieb 20 umfasst eine in eine Rotationsbewegung versetzte Kurbelwelle 22, welche über eine Schubstange 23 trieblich mit dem Hubkolben 21 verbunden ist. Die oszillierende Bewegung des Hubkolbens 21 des ersten Geberzylinders 14 wird im Wesentlichen auf den Hubkolben 24 des Nehmerzylinders 11 übertragen. Gegenüber einem ventilgesteuerten Hydraulikantrieb der Messer 4 mit einem im Wesentlichen rechteckigen Geschwindigkeitsprofil ist das sinusförmige Geschwindigkeitsprofil materialschonender und die oszillierende Bewegung der Messer 4 werden im geringeren Maße auf den Aufbau des Schneidwerks 1 übertragen. Der Kurbeltrieb 20 kann beispielsweise hintenseitig am Schneidwerk 1 angeordnet und mittels der Antriebswelle 10 oder Kardanwelle 8 trieblich verbunden sein.

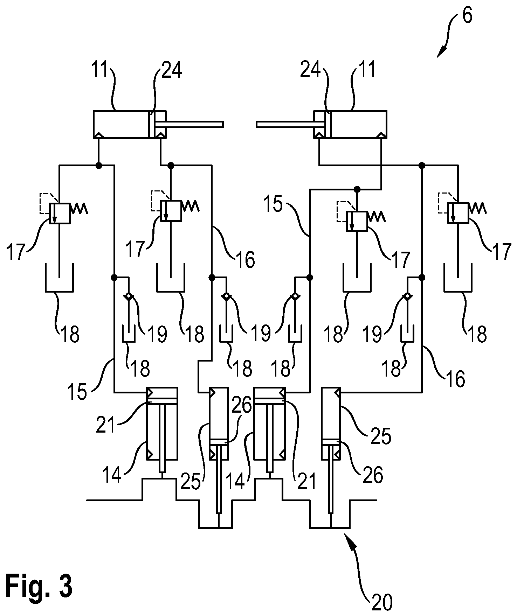

Fig. 3 zeigt eine weitere Ausführungsform einer erfindungsgemäßen hydraulischen Messerantriebseinrichtung 6. Die in Fig. 3 dargestellte Messerantriebseinrichtung 6 umfasst zwei doppelt wirkende Nehmerzylinder 11, zwei einfach wirkende erste Geberzylinder 14 und zwei einfach wirkende zweite Geberzylinder 25. Jeweils ein erster Geberzylinder 14 und ein zweiter Geberzylinder 25 sind hydraulisch mit einem Nehmerzylinder 11 verbunden. Hierbei verbindet jeweils eine erste Hydraulikleitung 15 die Kolbenseite eines ersten Geberzylinders 14 mit der Kolbenseite eines Nehmerzylinders 11 und jeweils eine zweite Hydraulikleitung 16 die Kolbenseite des zweiten Geberzylinders 25 mit der Stangenseite eines Nehmerzylinders 11.

Analog zu der in Fig. 2 beschriebenen Ausführungsform sind den Geberzylindern 14, 25 Rückschlagventile 19 zugeordnet, welche die Geberzylinder 14, 25 mit dem Reservoir 18 verbinden. Weiterhin sind den Nehmerzylindern 11 kolbenseitig und stangenseitig jeweils ein Druckbegrenzungsventil 17 zugeordnet mittels derer die Nehmerzylinder 11 mit dem Reservoir 18 verbunden sind. Hierfür sind die ersten und zweiten Hydraulikleitungen 15, 16 jeweils in einem dem Nehmerzylinder 11 zugewandten Bereich durch jeweils ein Druckbegrenzungsventil 17 mit dem Reservoir 18 verbunden und jeweils in einem dem Geberzylinder 14, 25 zugewandten Bereich mittels eines Rückschlagventils 19 mit dem Reservoir 18 verbunden.

Das Hubvolumen der beiden ersten Geberzylinder 14 ist wie bereits zuvor beschrieben zur Synchronisierung mit den Nehmerzylindern 11 größer als das Hubvolumen der Nehmerzylinder 11. Hierdurch ist das Erreichen einer ersten vorgesehenen Bewegungsendlage des dem jeweiligen Nehmerzylinder 11 zugeordneten Hubkolbens 24 sowie eine Synchronisierung mit dem jeweiligen Hubkolben 21 des ersten Geberzylinders 14 sichergestellt. Das Hubvolumen der zweiten Geberzylinder 25 ist kleiner als das Hubvolumen des ersten Geberzylinders 14 ausgeführt und entspricht im dargestellten Ausführungsbeispiel dem Hubvolumen des Nehmerzylinders 11.

Dadurch, dass das Hubvolumen der jeweiligen zweiten Geberzylinder 25 kleiner als das der ersten Geberzylinder 14 ist, wird die Verweilzeit des dem Nehmerzylinder 11 zugeordneten Hubkolbens 24 in seiner zweiten Bewegungsendlage verringert, das Öl weniger stark komprimiert und somit weniger stark erhitzt. Es sei darauf hingewiesen, dass das Hubvolumen des jeweiligen zweiten Geberzylinders 25 ebenfalls größer oder aber auch kleiner als das Hubvolumen des Nehmerzylinders 11 sein kann.

Die ersten und zweiten Geberzylinder 14, 25 werden mittels eines Kurbeltriebs 20 gemeinsamen angetrieben, wobei die Bewegung der Hubkolben 21 der ersten Geberzylinder 14 um 180 Grad phasenversetzt zu den Hubkolben 26 der zweiten Geberzylinder 25 ist.

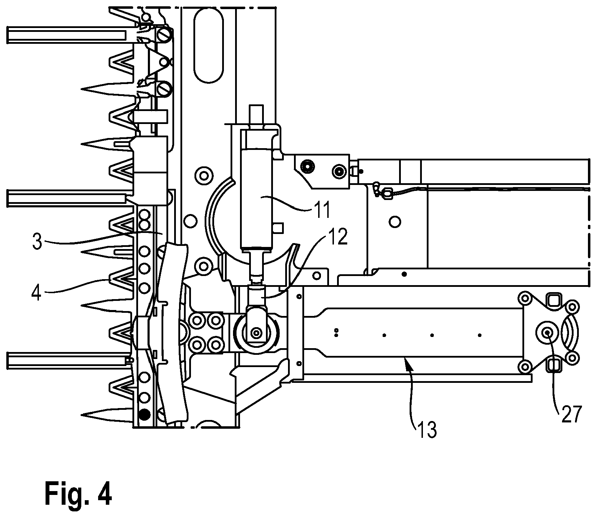

Die beiden Nehmerzylinder 11 treiben zwei hier nicht dargestellte Messerbalken 3 gegenläufig zueinander an. Die Nehmerzylinder können exemplarisch unmittelbar an den Messerbalken 3 angeordnet sein oder wie Fig. 4 zeigt, erfindungsgemäβ mittels eines Hebels 13 die Messerbalken 3 antreiben.

Hierfür ist der in Fig. 4 dargestellte Hebel 13 an einem äußeren Ende drehbeweglich um eine sich vertikal erstreckende Achse 27 gelagert. An seinem anderen Ende ist der Hebel 13 ortsfest mit dem Messerbalken 3 verbunden, beispielsweise verschraubt. Der Messerbalken 3 haltert die Messer 4. Zwischen den beiden äußeren Enden des Hebels 13 ist der Nehmerzylinder 11 an dem Hebel 13 angelenkt. Die Kolbenstange 12 des dem Nehmerzylinder 11 zugeordneten Hubkolbens 24 kann beispielsweise mit dem äußeren Ende drehbeweglich an dem Hebel 13 angeordnet sein. Das Antreiben des Messerbalkens 3 bzw. der Messer 4 mittels eines Hebels 13 ermöglicht eine beabstandete Anordnung des Nehmerzylinders 11 zu dem Messerbalken 3 in einem rückwärtigen Bereich des Schneidwerks 1. Weiterhin wird durch den Hebel 13 die auf den Messerbalken 3 übertragene Amplitude der Hubbewegung des dem Nehmerzylinder 11 zugeordneten Hubkolbens 24 vergrößert.

### Bezugszeichenliste:

- 1: Schneidwerk
- 2: Schneidtisch
- 3: Messerbalken
- 4: Messer
- 5: Finger
- 6: Messerantriebseinrichtung
- 7: Schrägförderer
- 8: Kardanwelle
- 9: Winkeltrieb
- 10: Antriebswelle
- 11: Nehmerzylinder
- 12: Kolbenstange
- 13: Hebel
- 14: Erste Geberzylinder
- 15: Erste Hydraulikleitung
- 16: Zweite Hydraulikleitung
- 17: Druckbegrenzungsventil
- 18: Reservoir
- 19: Rückschlagventil
- 20: Kurbeltrieb
- 21: Hubkolben
- 22: Kurbelwelle
- 23: Schubstange
- 24: Hubkolben
- 25: Zweite Geberzylinder
- 26: Hubkolben
- 27: Achse

## Patentansprüche

1. Vorsatzgerät für eine Erntemaschine mit einem oszillierenden Messer (4) und einer hydraulischen Messerantriebseinrichtung (6) für das oszillierende Messer (4), umfassend zumindest einen Nehmerzylinder (11) zum Antrieb des oszillierenden Messers (4), wobei der zumindest eine Nehmerzylinder (11) durch zumindest einen ersten Geberzylinder (14) angetrieben ist, wobei der zumindest eine erste Geberzylinder (14) ein größeres Hubvolumen als der zumindest eine Nehmerzylinder (11) aufweist, **dadurch gekennzeichnet, dass** der zumindest eine Nehmerzylinder (11) trieblich mit einem schwenkbeweglich gelagerten Hebel (13) verbunden ist, wobei der Hebel (13) endseitig an dem Messer (4) angeordnet ist..

2. Vorsatzgerät nach Anspruch 1, **dadurch gekennzeichnet,**
**dass** der zumindest eine Nehmerzylinder (11) als doppeltwirkender Zylinder ausgebildet ist.

3. Vorsatzgerät nach einem der Ansprüche 1 oder 2, **dadurch gekennzeichnet,**
**dass** der zumindest eine Nehmerzylinder (11) auf der Kolbenseite und Stangenseite über jeweils ein Druckbegrenzungsventil (17) mit einem Reservoir (18) verbunden ist.

4. Vorsatzgerät nach einem der Ansprüche 1 bis 3, **dadurch gekennzeichnet,**
**dass** der zumindest eine erste Geberzylinder (14) über zumindest ein Rückschlagventil (19) mit dem Reservoir (18) verbunden ist.

5. Vorsatzgerät nach einem der Ansprüche 1 bis 4, **dadurch gekennzeichnet,**
**dass** der zumindest eine erste Geberzylinder (14) als doppelt wirkender Zylinder ausgebildet ist.

6. Vorsatzgerät nach Anspruch 5, **dadurch gekennzeichnet,**
**dass** der zumindest eine erste Geberzylinder (14) durch einen Kurbeltrieb (20) angetrieben ist.

7. Vorsatzgerät nach einem der Ansprüche 5 bis 6, **dadurch gekennzeichnet,**
**dass** der zumindest eine erste Geberzylinder (14) auf der Kolbenseite und Stangenseite über jeweils ein Rückschlagventil (19) mit dem Reservoir (18) verbunden ist.

8. Vorsatzgerät nach einem der Ansprüche 5 bis 7, **dadurch gekennzeichnet,**
**dass** der zumindest eine erste Geberzylinder (14) und der zumindest eine Nehmerzylinder (11) sowohl auf der Kolbenseite als auch auf der Stangenseite hydraulisch miteinander verbunden sind, wobei insbesondere eine erste Hydraulikleitung (15) die Kolbenseiten und eine zweite Hydraulikleitung (16) die Stangenseiten der Zylinder miteinander verbindet.

9. Vorsatzgerät nach einem der Ansprüche 5 bis 8, **dadurch gekennzeichnet,**
**dass** die hydraulische Messerantriebseinrichtung (6) einen doppelt wirkenden ersten Geberzylinder (14) und einen doppeltwirkenden Nehmerzylinder (11) umfasst, wobei der erste Geberzylinder (14) und der Nehmerzylinder (11) hydraulisch miteinander verbunden sind, wobei der Nehmerzylinder (11) kolbenseitig und stangenseitig jeweils über ein Druckbegrenzungsventil (17) mit dem Reservoir (18) verbunden ist, wobei der erste Geberzylinder (14) kolbenseitig und stangenseitig jeweils über ein Rückschlagventil (19) mit dem Reservoir (18) verbunden ist, wobei der erste Geberzylinder (14) mittels eines Kurbeltriebs (20) angetrieben ist.

10. Vorsatzgerät nach einem der Ansprüche 1 bis 4, **dadurch gekennzeichnet,**
**dass** die hydraulische Messerantriebseinrichtung (6) zumindest einen zweiten Geberzylinder (25) aufweist, wobei vorzugsweise der zumindest eine erste und der zumindest eine zweite Geberzylinder (14, 25) als einfachwirkende Zylinder ausgebildet sind, wobei der zumindest eine erste und der zumindest eine zweite Geberzylinder (14 25) hydraulisch mit dem zumindest einen Nehmerzylinder (11) verbunden sind, wobei der zumindest eine erste und der zumindest eine zweite Geberzylinder (14, 25) über jeweils ein Rückschlagventil (19) mit dem Reservoir (18) verbunden sind.

11. Vorsatzgerät nach Anspruch 10, **dadurch gekennzeichnet,**
**dass** der zumindest eine zweite Geberzylinder (25) ein kleineres Hubvolumen als der zumindest eine erste Geberzylinder (14) aufweist, wobei vorzugsweise das Hubvolumen des zumindest einen zweiten Geberzylinders (25) im Wesentlichen dem Hubvolumen des zumindest einen Nehmerzylinders (11) entspricht.

12. Vorsatzgerät nach einem der Ansprüche 10 bis 11, **dadurch gekennzeichnet,**
**dass** die Geberzylinder (14, 25) durch einen Kurbeltrieb (20) angetrieben sind.

13. Vorsatzgerät nach einem der Ansprüche 10 bis 12, **dadurch gekennzeichnet,**
**dass** die hydraulische Messerantriebseinrichtung (6) zwei einfach wirkende erste Geberzylinder (14) und zwei einfach wirkende zweite Geberzylinder (25) umfasst, wobei jeweils ein erster Geberzylinder (14) und ein zweiter Geberzylinder (25) mit einem doppelt wirkenden Nehmerzylinder (11) hydraulisch verbunden ist, wobei die Nehmerzylinder (11) kolbenseitig und stangenseitig über jeweils ein Druckbegrenzungsventil (17) mit dem Reservoir (18) verbunden sind, wobei die ersten und zweiten Geberzylinder (14, 25) über jeweils ein Rückschlagventil (19) mit dem Reservoir (18) verbunden sind, wobei die ersten und zweiten Geberzylinder (14, 25) über einen Kurbeltrieb (20) gemeinsam angetrieben sind, wobei der Antrieb der ersten Geberzylinder (14) um 180 Grad phasenverschoben zum Antrieb der zweiten Geberzylinder (25) ist.

14. Vorsatzgerät nach einem der Ansprüche 1 bis 13, **dadurch gekennzeichnet,**
**dass** das Vorsatzgerät zwei Messerbalken (3) und die Messerantriebseinrichtung (6) zumindest zwei Nehmerzylinder (11) aufweist, wobei die Messerantriebseinrichtung (6) derart ausgestaltet ist, dass die Nehmerzylinder (11) die Messerbalken (3) gegenläufig zueinander antreiben.

## Claims

1. A front attachment for a harvesting machine, with an oscillating cutter (4) and a hydraulic cutter driving device (6) for the oscillating cutter (4), comprising at least one slave cylinder (11) for driving the oscillating cutter (4), wherein the at least one slave cylinder (11) is driven by at least one first master cylinder (14),
wherein the at least one first master cylinder (14) has a larger piston displacement than the at least one slave cylinder (11), **characterized in that** the at least one slave cylinder (11) is operatively connected to a pivotably mounted crank (13), wherein the end of the crank (13) is disposed on the cutter (4).

2. The front attachment according to claim 1, **characterized in that** the at least one slave cylinder (11) is constructed as a double acting cylinder.

3. The front attachment according to claim 1 or claim 2,
**characterized in that**, on the piston side and rod side, the at least one slave cylinder (11) is connected to a reservoir (18) via a respective pressure relief valve (17).

4. The front attachment according to one of claims 1 to 3,
**characterized in that** the at least one first master cylinder (14) is connected to the reservoir (18) via at least one check valve (19).

5. The front attachment according to one of claims 1 to 4,
**characterized in that** the at least one first master cylinder (14) is constructed as a double acting cylinder.

6. The front attachment according to claim 5, **characterized in that** the at least one first master cylinder (14) is driven by a crank drive (20).

7. The front attachment according to one of claims 5 to 6,
**characterized in that** on the piston side and rod side, the at least one first master cylinder (14) is connected to the reservoir (18) via a respective check valve (19).

8. The front attachment according to one of claims 5 to 7,
**characterized in that** the at least one first master cylinder (14) and the at least one slave cylinder (11) are connected together hydraulically on both the piston side as well as on the rod side, wherein in particular, a first hydraulic line (15) connects the piston sides together and a second hydraulic line (16) connects the rod sides of the cylinders together.

9. The front attachment according to one of claims 5 to 8,
**characterized in that** the hydraulic cutter driving device (6) comprises a double acting first master cylinder (14) and a double acting slave cylinder (11), wherein the first master cylinder (14) and the slave cylinder (11) are connected together hydraulically, wherein on the piston side and rod side, the slave cylinder (11) is connected to the reservoir (18) via a respective pressure relief valve (17), wherein on the piston side and rod side, the first master cylinder (14) is connected to the reservoir (18) via a respective check valve (19), wherein the first master cylinder (14) is driven by means of a crank drive (20).

10. The front attachment according to one of claims 1 to 4,
**characterized in that** the hydraulic cutter driving device (6) has at least one second master cylinder (25), wherein preferably, the at least one first and the at least one second master cylinders (14, 25) are constructed as single acting cylinders, wherein the at least one first and the at least one second master cylinders (14, 25) are hydraulically connected to the at least one slave cylinder (11), wherein the at least one first and the at least one second master cylinders (14, 25) are connected to the reservoir (18) via a respective check valve (19).

11. The front attachment according to claim 10, **characterized in that** the at least one second master cylinder (25) has a smaller piston displacement than the at least one first master cylinder (14), wherein preferably, the piston displacement of the at least one second master cylinder (25) substantially corresponds to the piston displacement of the at least one slave cylinder (11).

12. The front attachment according to one of claims 10 to 11, **characterized in that** the master cylinders (14, 25) are driven by a crank drive (20).

13. The front attachment according to one of claims 10 to 12, **characterized in that** the hydraulic cutter driving device (6) comprises two single acting first master cylinders (14) and two single acting second master cylinders (25), wherein respectively, a first master cylinder (14) and a second master cylinder (25) is hydraulically connected to a double acting slave cylinder (11), wherein on the piston side and rod side, the slave cylinders (11) are connected to the reservoir (18) via a respective pressure relief valve (17), wherein the first and second master cylinders (14, 25) are connected to the reservoir (18) via a respective check valve (19), wherein the first and second master cylinders (14, 25) are jointly driven via a crank drive (20), wherein the drive for the first master cylinder (14) and the drive for the second master cylinder (25) are 180 degrees out of phase.

14. The front attachment according to one of claims 1 to 13,
**characterized in that** the front attachment has two cutter bars (3) and the cutter driving device (6) has at least two slave cylinders (11), wherein the cutter driving device (6) is designed in a manner such that the slave cylinder (11) drives the cutter bars (3) in opposite directions to each other.

## Revendications

1. Outil frontal destiné à une machine de récolte, comprenant un couteau (4) oscillant et un dispositif d'entraînement de couteau (6) hydraulique pour le couteau (4) oscillant, comportant au moins un vérin récepteur (11) pour l'entraînement du couteau (4) oscillant, le vérin récepteur (11), au nombre d'au moins un, étant entraîné par au moins un premier vérin émetteur (14),
dans lequel le premier vérin émetteur (14), au nombre d'au moins un, présente une cylindrée qui est supérieure à celle du vérin récepteur (11), au nombre d'au moins un, **caractérisé en ce que** le vérin récepteur (11), au nombre d'au moins un, est en liaison motrice avec un levier (13) monté avec possibilité de pivotement, le levier (13) étant disposé côté extrémité sur le couteau (4).

2. Outil frontal selon la revendication 1, **caractérisé en ce que** le vérin récepteur (11), au nombre d'au moins un, est réalisé sous forme de vérin à double effet.

3. Outil frontal selon une des revendications 1 ou 2, **caractérisé en ce que** le vérin récepteur (11), au nombre d'au moins un, est relié à un réservoir (18) sur le côté piston et le côté tige, respectivement par l'intermédiaire d'une soupape de limitation de pression (17).

4. Outil frontal selon une des revendications 1 à 3, **caractérisé en ce que** le premier vérin émetteur (14), au nombre d'au moins un, est relié au réservoir (18) par l'intermédiaire d'au moins un clapet de non-retour (19).

5. Outil frontal selon une des revendications 1 à 4, **caractérisé en ce que** le premier vérin émetteur (14), au nombre d'au moins un, est réalisé sous la forme d'un vérin à double effet.

6. Outil frontal selon la revendication 5, **caractérisé en ce que** le premier vérin émetteur (14), au nombre d'au moins un, est entraîné par un mécanisme à vilebrequin (20).

7. Outil frontal selon une des revendications 5 à 6, **caractérisé en ce que** le premier vérin émetteur (14), au nombre d'au moins un, est relié au réservoir (18), côté piston et côté tige, respectivement par l'intermédiaire d'un clapet de non-retour (19).

8. Outil frontal selon une des revendications 5 à 7, **caractérisé en ce que** le premier vérin émetteur (14), au nombre d'au moins un, et le vérin récepteur (11), au nombre d'au moins un, sont reliés hydrauliquement entre eux aussi bien côté piston que côté tige, sachant notamment qu'une première conduite hydraulique (15) relie entre eux les côtés pistons et une deuxième conduite hydraulique (16) relie entre eux les côtés tiges des vérins.

9. Outil frontal selon une des revendications 5 à 8, **caractérisé en ce que** le dispositif d'entraînement de couteau (6) hydraulique comprend un premier vérin émetteur (14) à double effet et un vérin récepteur (11) à double effet, le premier vérin émetteur (14) et le vérin récepteur (11) étant reliés hydrauliquement entre eux, le vérin récepteur (11) étant relié au réservoir (18), côté piston et côté tige, respectivement par l'intermédiaire d'une soupape de limitation de pression (17), le premier vérin émetteur (14) étant relié au réservoir (18), côté piston et côté tige, respectivement par l'intermédiaire d'un clapet de non-retour (19), le premier vérin émetteur (14) étant entraîné au moyen d'un mécanisme à vilebrequin (20).

10. Outil frontal selon une des revendications 1 à 4, **caractérisé en ce que** le dispositif d'entraînement de couteau (6) hydraulique présente au moins un deuxième vérin émetteur (25), le premier et le deuxième vérin émetteur (14, 25), respectivement au nombre d'au moins un, étant de préférence réalisés sous forme de vérins à simple effet, le premier et le deuxième vérin émetteur (14, 25), respectivement au nombre d'au moins un, étant reliés hydrauliquement au vérin récepteur (11), au nombre d'au moins un, le premier et le deuxième vérin émetteur (14, 25), respectivement au nombre d'au moins un, étant reliés au réservoir (18), respectivement par l'intermédiaire d'un clapet de non-retour (19).

11. Outil frontal selon la revendication 10, **caractérisé en ce que** le deuxième vérin émetteur (25), au nombre d'au moins un, présente une cylindrée qui est inférieure à celle du premier vérin émetteur (14), au nombre d'au moins un, la cylindrée du deuxième vérin émetteur (25), au nombre d'au moins un, correspondant de préférence sensiblement à la cylindrée du vérin récepteur (11), au nombre d'au moins un.

12. Outil frontal selon une des revendications 10 à 11, **caractérisé en ce que** les vérins émetteurs (14, 25) sont entraînés par un mécanisme à vilebrequin (20).

13. Outil frontal selon une des revendications 10 à 12, **caractérisé en ce que** le dispositif d'entraînement de couteau (6) hydraulique comprend deux premiers vérins émetteurs (14) à simple effet et deux deuxièmes vérins émetteurs (25) à simple effet, sachant que respectivement un premier vérin émetteur (14) et un deuxième vérin émetteur (25) est relié hydrauliquement à un vérin récepteur (11) à double effet, les vérins récepteurs (11) étant reliés au réservoir (18), côté piston et côté tige, respectivement par l'intermédiaire d'une soupape de limitation de pression (17), les premiers et deuxièmes vérins émetteurs (14, 25) étant reliés au réservoir (18), respectivement par l'intermédiaire d'un clapet de non-retour (19), les premiers et deuxièmes vérins émetteurs (14, 25) étant entraînés conjointement par l'intermédiaire d'un mécanisme à vilebrequin (20), l'entraînement des premiers vérins émetteurs (14) présentant un déphasage de 180 degrés par rapport à l'entraînement des deuxièmes vérins émetteurs (25).

14. Outil frontal selon une des revendications 1 à 13, **caractérisé en ce que** l'outil frontal présente deux barres porte-couteau (3), et le dispositif d'entraînement de couteau (6) présente au moins vérins récepteurs (11), le dispositif d'entraînement de couteau (6) étant agencé de manière à ce que les vérins récepteurs (11) entraînent les barres porte-couteau (3) dans des sens contraires l'une par rapport à l'autre.
